# FASCICULE DE BREVET EUROPEEN

(11) **EP 0 704 296 B1**
(45) Date de publication et mention de la délivrance du brevet: **22.12.1999**
(21) Numéro de dépôt: 95114943.4
(22) Date de dépôt: 22.09.1995
(51) Int. Cl.: B29D 30/58, B29D 30/30

(54) **Procédé et dispositif d'application d'une bande de roulement prémoulée et prévulcanisée sur une carcasse de pneumatique**
Verfahren und Vorrichtung zum Aufbringen eines vorgeformten und vorvulkanisierten Laufstreifens zu einer Reifenkarkasse
Method and apparatus for applying a premolded and prevulcanized tread to a tyre carcass

(30) Priorité: 30.09.1994 FR 9411972
(43) Date de publication de la demande: 03.04.1996
(73) Titulaire: RECAMIC S.A., 1762 Givisiez (CH)
(72) Inventeur:
(74) Mandataire: Bauvir, Jacques

(56) Documents cités:
- WO-A-92/21513
- DE-A- 2 105 765
- DE-B- 1 303 856
- FR-A- 2 225 277
- US-A- 3 874 974
- US-A- 4 386 273
- US-A- 5 292 398

## Description

La présente invention se rapporte à un procédé et à un dispositif d'application d'une bande de roulement prémoulée et prévulcanisée sur une carcasse de pneumatique en vue de son rechapage.

Le procédé de rechapage d'une carcasse de pneumatiques avec une bande de roulement prémoulée et prévulcanisée est bien connu. Après avoir ôté ce qu'il reste de la bande de roulement usagée par une opération d'usinage de la carcasse et mis en place une couche de liaison a lieu l'opération d'application d'une nouvelle bande de roulement prémoulée et prévulcanisée suivie d'une vulcanisation en autoclave ou à froid de cette couche de liaison destinée à assurer l'adhérence entre la nouvelle bande de roulement et la carcasse.

Dans ce procédé, l'application de la bande de roulement sur la carcasse est une opération clef.

Pour que cette application soit satisfaisante et durable, il faut partir d'une bande de roulement de longueur légèrement plus courte que la plus grande circonférence de la carcasse à rechaper et l'appliquer allongée pour assurer un frettage de la carcasse. Cet allongement doit être réparti sur toute la circonférence tout en obtenant une mise en compression des deux extrémités de la bande de roulement et en respectant, si nécessaire, le pas des sculptures.

Cet application se fait classiquement de façon manuelle. C'est l'opérateur qui, en prenant appui contre le bâti du dispositif, allonge la bande de roulement pendant son application.

Pour pallier la forte variabilité du procédé manuel, des dispositifs d'extension automatique de la bande de roulement lors de son application ont été développés. Ces dispositifs utilisent une table d'application pour présenter la bande de roulement contre la carcasse et l'allongent lors de son application au moyen d'un rouleau applicateur dont l'effort d'application est asservi en fonction de la différence mesurée entre l'allongement de la bande de roulement à obtenir et l'allongement réel.

La demande WO92/21513 décrit un tel dispositif automatique où l'allongement réel de la bande de roulement est mesuré à partir des mesures de l'arc de la carcasse où l'application est réalisée et de la longueur, à l'état non déformé, de bande de roulement utilisée. La mesure d'arc de carcasse utilise un codeur optique solidaire de l'axe d'entraînement du mandrin sur lequel est montée et gonflée la carcasse ; la longueur de bande de roulement utilisée est obtenue en mesurant le déplacement de l'extrémité libre de la bande de roulement.

Ces dispositifs automatiques ne permettent cependant pas une application complète de la bande de roulement : l'opérateur doit toujours appliquer lui-même manuellement la dernière partie de la bande de roulement sur une longueur de 200 à 300 mm, ce qui peut correspondre à 10 % de sa longueur, pour assurer un aboutage correct des deux extrémités avant et arrière de la bande de roulement. Cette application manuelle se fait sans employer le rouleau applicateur donc avec moins de puissance, ce qui perturbe la régularité de l'allongement de la bande de roulement et ralentit son application.

Un autre problème concerne la reproductibilité de l'effort du rouleau applicateur à appliquer sur la bande de roulement. On constate que, dans des conditions théoriquement identiques, cet effort peut varier de façon significative, ce qui, à nouveau, entraîne des irrégularités dans la répartition circonférentielle des allongements des bandes de roulement.

L'invention a pour objectif de pallier les difficultés précédentes en fournissant un procédé et un dispositif qui facilitent l'application de la bande de roulement sur la carcasse, améliorent la répartition circonférentielle des allongements des bandes de roulement et améliorent leur centrage sur les carcasses de pneumatiques.

L'invention a pour objet un procédé d'application d'une bande de roulement prémoulée et prévulcanisée sur une carcasse de pneumatique montée gonflée sur un mandrin, ladite bande de roulement étant prédécoupée à une longueur voulue inférieure à la plus grande circonférence du sommet de ladite carcasse, disposée sur une table d'application et allongée, lors de son application sur ladite carcasse, par un rouleau applicateur pressant ladite bande de roulement sur ladite carcasse avec un effort variable tel que :
- on applique une première partie de ladite longueur voulue de ladite bande de roulement sur ladite carcasse en asservissant son allongement en fonction de la différence entre l'allongement réel mesuré et l'allongement théorique correspondant à une extension uniforme de la bande de roulement sur la carcasse, et,
- à la fin de l'application, on asservit l'allongement de la dernière partie de ladite longueur voulue de ladite bande de roulement en fonction des positions respectives des deux extrémités avant et arrière de la bande de roulement comparées visuellement, avec une incidence sensiblement radiale, de telle sorte qu'elles s'aboutent sans recouvrement puis s'appliquent l'une contre l'autre.

Ce procédé a l'avantage de permettre l'application complète de la bande de roulement sur la carcasse avec le rouleau applicateur et cela, en un seul tour de rotation de la carcasse.

Pendant la première partie de l'application, l'asservissement de l'allongement de la bande de roulement peut être réalisée automatiquement, par exemple avec le dispositif décrit précédemment dans WO92/21513, ou de façon semi-automatique. Le procédé selon l'invention devient alors : après avoir placé sur la bande de roulement n repères divisant ladite bande de roulement en n+1 parties de longueurs égales :
- on met en place l'extrémité avant de la bande de roulement sur le sommet de la carcasse et sous le rouleau applicateur jusqu'à une position repérée par un index ;
- on règle l'effort d'application du rouleau applicateur à une valeur appropriée compte tenu de l'allongement à imposer à la bande de roulement pendant son application et du type de bande de roulement ;
- on fait effectuer à la carcasse une première rotation de 360/(n+1) degrés puis on l'arrête ;
- on contrôle les positions respectives du premier des n repères et de l'index ;
- on ajuste l'effort d'application du rouleau applicateur en fonction de la différence de position entre le premier des n repères et l'index ;
- on répète n-1 fois cette opération de contrôle de l'allongement de la bande de roulement ;
- à la fin de l'application, on asservit l'allongement de la dernière partie de ladite bande de roulement en fonction des positions respectives des deux extrémités avant et arrière de la bande de roulement comparées visuellement, avec une incidence sensiblement radiale, de telle sorte qu'elles s'aboutent sans recouvrement puis s'appliquent l'une contre l'autre.

La comparaison entre les positions respectives des deux extrémités avant et arrière de la bande de roulement peut être faite visuellement directement ou avec l'aide d'une caméra, avec une incidence sensiblement radiale, par l'opérateur, qui peut alors ajuster lui-même l'effort d'application du rouleau applicateur.

Cette observation visuelle directe est facilitée lorsqu'elle est faite à travers une fente pratiquée dans la table d'application.

Selon une variante du procédé selon l'invention, à la fin de l'application, l'opérateur retire la table d'application de la bande de roulement de sa position sous la partie restante non encore appliquée de la bande de roulement puis suit visuellement, avec une incidence sensiblement radiale, les positions respectives des deux extrémités avant et arrière de ladite bande de roulement et ajuste l'allongement de la partie de ladite bande de roulement non encore appliquée de telle sorte qu'elles s'aboutent sans recouvrement puis s'appliquent l'une contre l'autre.

L'invention a aussi pour objet un dispositif d'application d'une bande de roulement prémoulée et prévulcanisée sur une carcasse de pneumatique comportant un bâti avec :
- des moyens de support capables de maintenir la carcasse, de la gonfler et de la mettre en rotation ;
- des moyens d'application de ladite bande de roulement comprenant une table d'application, un rouleau applicateur avec des moyens de réglage de l'effort d'application dudit rouleau ;
ledit dispositif étant caractérisé en ce que ladite table d'application est mobile en rotation autour d'un axe parallèle à l'axe de rotation de la carcasse, lié à l'une des extrémités de ladite table et placé de telle sorte que l'extrémité libre de ladite table vienne s'appliquer sur le sommet de la carcasse du pneumatique, sensiblement tangentiellement à celui-ci et en ce que ladite table d'application comprend au moins une fente orientée longitudinalement, de telle sorte que l'opérateur puisse suivre visuellement, avec une incidence sensiblement radiale, les positions respectives des deux extrémités avant (3) et arrière (4) de la bande de roulement (2) à la fin de l'application de ladite bande de roulement (2) sur ladite carcasse (1).

Selon une variante de ce dispositif, la table d'application peut être retirée de sa position sous la partie de la bande de roulement non encore appliquée avec un mouvement de retrait de direction, au moins initialement, sensiblement tangentielle par rapport au sommet de la carcasse.

L'opérateur a ainsi toute la place disponible pour suivre la dernière phase d'application de la bande de roulement en ajustant son allongement jusqu'à l'aboutage final.

Avantageusement, la table d'application peut se rabattre vers le haut avec un mouvement de rotation d'axe parallèle à l'axe de rotation de la carcasse situé au-dessus du point de contact entre ladite table et le sommet de la carcasse.

Selon un autre aspect du dispositif selon l'invention, l'extrémité de la table d'application en contact avec le sommet de la carcasse est placé à une distance L sensiblement fixe de l'axe du rouleau applicateur, et cette distance est, avantageusement, de l'ordre de 130 mm.

Cette distance permet d'assurer une géométrie reproductible de la partie de la bande de roulement qui se trouve entre le rouleau applicateur et l'extrémité de la table d'application quel que soit l'effort d'application du rouleau. Cela améliore sensiblement la reproductibilité des conditions d'application des bandes de roulement.

Avantageusement, le dispositif selon l'invention comporte aussi des moyens de centrage de la bande de roulement sur la carcasse, ces moyens étant indépendants de la table d'application. Cela leur permet d'être toujours utilisables après le retrait de la table d'application.

Les figures suivantes illustrent le procédé d'assemblage selon l'invention et décrivent un mode de réalisation du dispositif pour sa mise en oeuvre :
- la figure 1 présente une vue générale du dispositif selon l'invention, vue orientée selon l'axe de rotation du mandrin support de la carcasse ;
- la figure 2 est une vue similaire à la figure 1 orientée perpendiculairement à l'axe de rotation du mandrin du côté de l'opérateur ;
- la figure 3, détail de la figure 1, représente les moyens d'application de la bande de roulement ;
- la figure 4 est une vue de côté correspondant à la figure 3 ;
- la figure 5 est une vue de dessus selon A tel qu'indiqué à la figure 3 ;
- la figure 6 présente schématiquement le début de l'application d'une bande de roulement ;
- la figure 7 présente schématiquement la fin de l'application d'une bande de roulement.

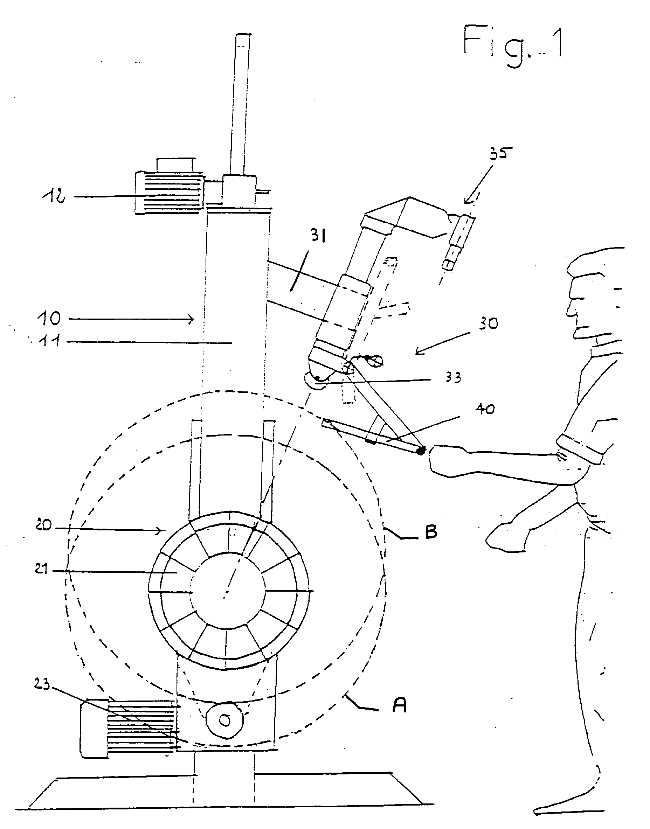

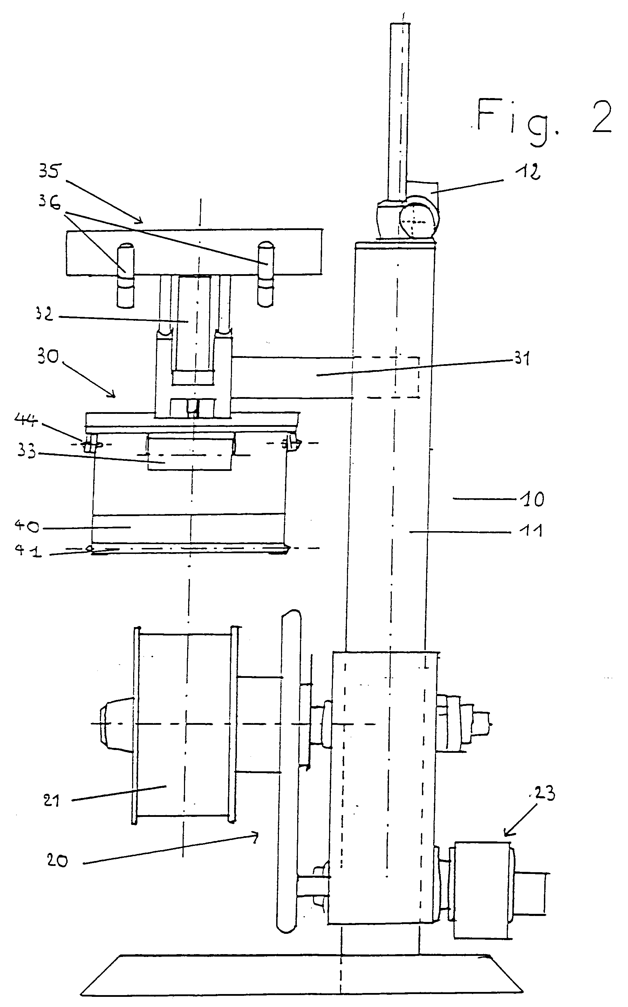

Les figures 1 et 2 présentent une vue générale d'un dispositif d'application d'une bande de roulement 2 prémoulée et prévulcanisée sur une carcasse 1 de pneumatique.

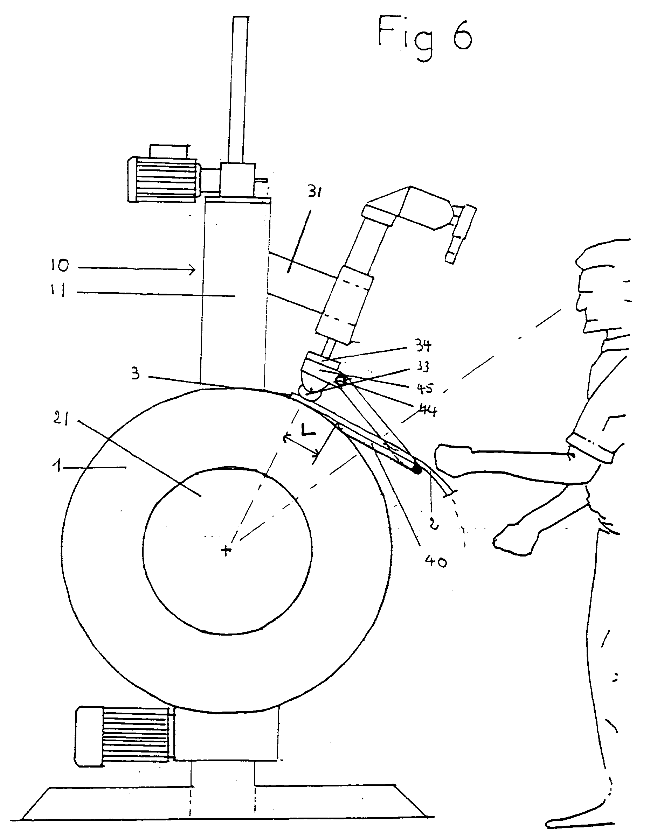

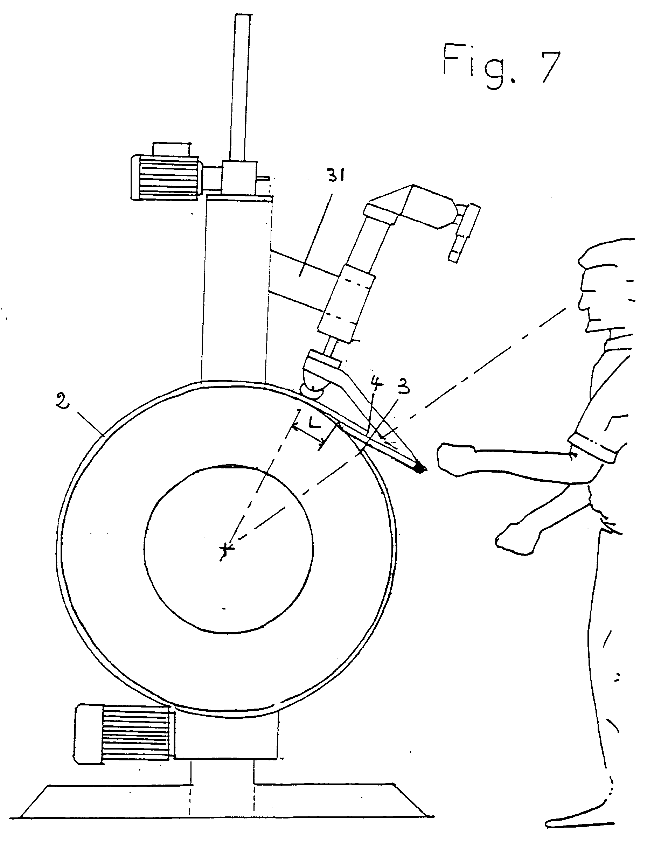

Ce dispositif comprend un bâti 10, des moyens 20 de support, gonflage et mise en rotation des carcasses 1, des moyens d'application 30 de la bande de roulement 2 sur la carcasse 1 (fig. 6, 7), ainsi que des moyens de rouletage et une armoire de commande non représentés. De façon connue, le dispositif comporte aussi des moyens (un codeur optique, par exemple) de suivi et de mesure de la rotation du mandrin 21 lors de l'application d'une bande de roulement 2 sur la carcasse 1 montée sur le mandrin 21.

Le bâti 10 supporte en porte à faux un mandrin 21 et son système d'entraînement 23. Le mandrin peut être déplacé verticalement, d'une position A de montage à une position B de travail, par le moteur 12 et un ensemble vis-écrou monté dans la colonne 11. Ce déplacement est limité de telle sorte que, en position B de travail, le sommet des carcasses 1 soit toujours placé à la même hauteur quel que soit le diamètre extérieur de ces carcasses 1.

Sur la figure 1 sont indiqués en pointillé les deux positions de montage A et de travail B d'une carcasse 1 de pneumatique.

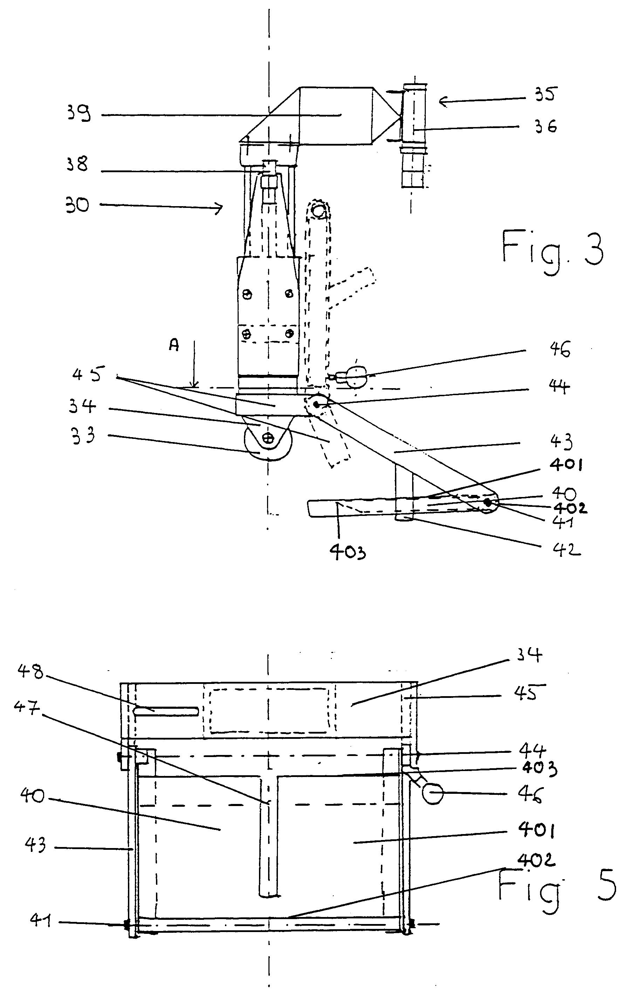

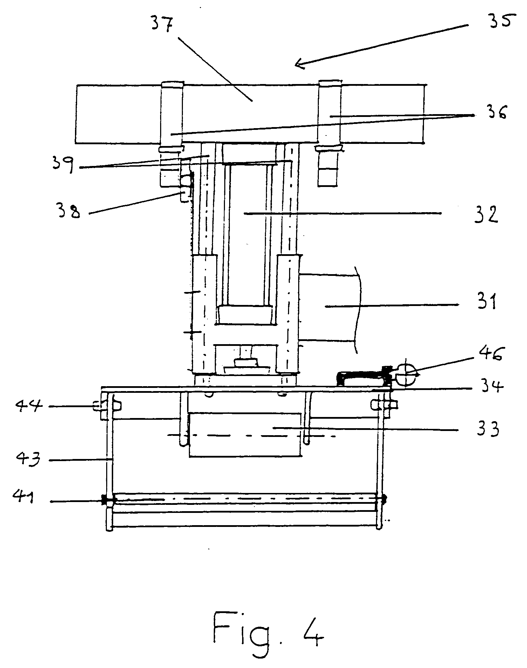

Les moyens 30 d'application de la bande de roulement 2 sur la carcasse 1 sont situés en avant du plan diamétral vertical passant par le sommet de la carcasse 1, du côté de l'opérateur. Ces moyens 30 comprennent (figures 3 à 5) :
- un support 31 reliant ces moyens au bâti 10, un vérin 32 auquel est rattaché par un support 34 un rouleau applicateur 33 ;
- une table d'application 40 reliée au support 34 du rouleau applicateur 33 ;
- des moyens de centrage 35 rigidement liés au support 31 ;
- un index 38 matérialisant un plan de référence radial pour l'application de la bande de roulement 2.

Le vérin 32 est monté sur le support 31 de telle sorte que la direction d'application du rouleau applicateur 33 soit sensiblement radiale, c'est-à-dire, sensiblement normale à la surface du sommet de la carcasse 1, quel que soit le diamètre de la carcasse 1. Le rouleau applicateur 33 a, par exemple, un diamètre de 80 mm et une longueur de 200 mm.

La table d'application 40 est une simple tablette, sur laquelle vient s'appuyer la bande de roulement 2 juste avant sa mise en contact avec le sommet de la carcasse 1. La table d'application 40 a sa surface de contact 401 avec la bande de roulement 2 revêtue d'un dispositif anti-frottement, par exemple du Nylon, pour avoir un glissement régulier de la bande de roulement lors de son passage sur cette surface de contact 401. A la figure 5, on voit que la table d'application a une fente longitudinale 47 pour permettre à l'opérateur de suivre aisément l'extrémité avant 3 de la bande de roulement 2 à la fin de son application sur la carcasse 1.

La table d'application 40 est reliée au support 34 du rouleau applicateur 33 par deux montants 43 qui lui permettent deux mouvements de rotation distincts. Le premier de ces mouvements de rotation est une rotation des montants 43 autour d'un axe 44, parallèle à l'axe du mandrin 21, pour définir deux positions de la table d'application 40, une première position de travail, où la table d'application va pouvoir s'appuyer contre le sommet de la carcasse 1, et une seconde position haute où la table d'application est rabattue vers le haut pour autoriser à l'opérateur une vision directe et complète de la zone d'aboutage des deux extrémités de la bande de roulement 2 à la fin de son application comme on l'indiquera ci-dessous. En position de travail, l'extrémité 45 des montants 43 vient se bloquer contre la surface radialement inférieure du support 34. Un loquet 46 bloque la table d'application en position haute ou basse. Les figures 1 et 3 représentent la table d'application 40 en traits continus en position de travail et en traits pointillés en position haute.

Le second mouvement de rotation de la table d'application 40 est une rotation de l'extrémité 402 de la table d'application 40 la plus éloignée du rouleau applicateur 33 autour d'un axe 41 parallèle à l'axe de rotation de la carcasse 1. Ce mouvement de rotation permet à l'extrémité 403 de la table d'application 40 la plus proche du rouleau applicateur de venir s'appuyer légèrement contre la surface du sommet de la carcasse 1. De préférence, cette même extrémité 403 a une forme de biseau pour limiter au minimum la distance séparant radialement la surface d'application 401, au niveau de cette extrémité 403, du sommet de la carcasse 1 (fig. 6 et 7). Des supports 42 limitent l'amplitude de la rotation de la table 40 autour de l'axe 41 lorsqu'elle n'est pas appuyée contre une carcasse 1.

Lorsque la table d'application 40 est en position de travail et en appui contre le sommet d'une carcasse 1, la distance L (fig. 7) séparant l'extrémité 403 du plan diamétral passant par la direction d'application du rouleau applicateur 33 est sensiblement constante puisque la table d'application est reliée au support 34 du rouleau applicateur 33 et le sommet des carcasses 1 est toujours placé à la même hauteur quel que soit le diamètre extérieur de ces carcasses 1. Cette distance L est de l'ordre de 130 mm.

De préférence, l'axe de rotation 44 est situé au-dessus de l'extrémité 403 de la table d'application 40 qui s'applique contre le sommet de la carcasse 1. Ainsi, lorsque la table d'application 40 est rabattue en position haute par l'opérateur, le mouvement de retrait de celle-ci a une direction, au moins initialement, sensiblement tangentielle par rapport au sommet de la carcasse. Cela facilite le retrait de la table d'application lorsqu'il ne reste plus que l'extrémité de la bande de roulement 2 à appliquer.

Les moyens de centrage 35 comprennent deux projecteurs laser 36 qui émettent des faisceaux plans longitudinaux qui doivent être rigoureusement perpendiculaires à l'axe de rotation de la carcasse 1. La distance séparant les deux faisceaux plans correspond exactement à la largeur des bandes de roulement 2 et peut être réglée par le déplacement latéral des deux projecteurs sur leur support 39 par des moyens 37 connus pour s'adapter aux différentes tailles de ces bandes de roulement 2.

Un index 38, également un projecteur laser, matérialise un plan radial de référence pour l'application, avantageusement, ce plan de référence passe par l'axe du rouleau applicateur (fig. 3).

Le support 34 du rouleau applicateur 33 est percé d'une fente 48 pour permettre le passage du faisceau de l'index 38 vers le sommet de la carcasse 1 montée sur son mandrin 21.

L'armoire de commande comprend, facilement accessible à l'opérateur, un potentiomètre de réglage de la pression d'application du vérin ainsi qu'un affichage de cette pression.

Le procédé d'application d'une bande de roulement 2 sur une carcasse 1 de pneumatique en vue de son rechapage est maintenant décrit en se référant au dispositif précédent.

Après avoir préparé la bande de roulement 2 de façon connue et placé sur elle trois repères divisant ladite bande de roulement 2 en quatre parties de longueurs égales :
- on monte une carcasse 1 de pneumatique préparée de façon connue sur le mandrin 21 et on gonfle la carcasse 1 ;
- on déplace verticalement l'axe du mandrin 21 jusqu'à ce que le point le plus haut du sommet de la carcasse 1 atteigne une hauteur fixe, l'extrémité libre de la table d'application 40 repose alors sur le sommet de la carcasse 1 (figures 6 et 7) ;
- on met en marche les deux projecteurs laser 36 pour qu'ils projettent deux lignes longitudinales sur la table d'application 40, ces deux lignes peuvent s'étendre jusqu'au rouleau applicateur 33 ;
- on ajuste la position et l'écartement des deux projecteurs laser 36 avec les moyens 37 pour qu'ils soient exactement adaptés à la largeur de la bande de roulement 2 à appliquer ;
- on met en place l'extrémité avant 3 d'une bande de roulement 2 sur la table d'application 40 et on engage ladite extrémité avant 3 sous le rouleau applicateur 33 jusqu'à la position repérée par l'index 38 ;
- de façon connue, on règle l'effort d'application du rouleau applicateur 33 à une valeur appropriée compte tenu de l'allongement à imposer à la bande de roulement 2 pendant son application et du type de bande de roulement 2 ;
- on fait effectuer à la carcasse 1 une première rotation de 360/4 soit 90 degrés tout en guidant la bande de roulement 2 entre les deux lignes définies par les projecteurs laser 36, puis on l'arrête ;
- on contrôle les positions respectives du premier des trois repères sur la bande de roulement 2 et du plan de référence matérialisé par l'index 38 ;
- de façon connue, on ajuste l'effort d'application du rouleau applicateur en fonction de la différence de position entre le premier des trois repères et le plan de référence matérialisé par l'index 38 ;
- on répète deux fois cette opération de contrôle de l'allongement de la bande de roulement 2, après une rotation de 180°, puis de 270° de la carcasse 1 ;
- à la fin de l'application (fig. 7), l'opérateur peut suivre comment les extrémités avant 3 et arrière 4 de la bande de roulement 2 s'ajustent l'une l'autre à travers la ou les fentes 47 longitudinales de la table d'application 40 et réaliser manuellement un asservissement fin de l'effort d'application du rouleau applicateur 33 de telle sorte que les deux extrémités s'aboutent sans recouvrement puis s'appliquent l'une contre l'autre.

Il est avantageux, pour suivre correctement visuellement l'ajustement des deux extrémités de la bande de roulement 2 d'avoir la carcasse 1 toujours placée à la même hauteur de travail, quel que soit son diamètre. Cela permet à l'opérateur de conserver la même incidence sensiblement radiale (figure 7) par rapport aux deux extrémités 3, 4 de la bande de roulement lors de leur aboutage.

Pour faciliter l'observation directe, la table d'application 40 peut avantageusement être incurvée avec un rayon de courbure proche de celui de la carcasse 1.

Selon une variante de ce procédé, à la fin de l'application, lorsque l'extrémité arrière de la bande de roulement 2 arrive sur la table d'application, l'opérateur rabat verticalement celle-ci pour la mettre en position haute et ainsi dégager complètement l'accès à la carcasse 1. Ce retrait peut être réalisé avec arrêt de la rotation de la carcasse 1 ou non en fonction de son habileté et des circonstances.

L'opérateur peut alors suivre l'application complète comme précédemment ou abouter manuellement les deux extrémités de la bande de roulement 2 puis dans les derniers centimètres d'application augmenter fortement l'effort d'application pour que les deux extrémités de la bande de roulement 2 soient mises en compression l'une contre l'autre.

Le procédé d'application selon l'invention permet donc une application avec une extension régulière de la bande de roulement 2 tout en obtenant une mise en compression des deux extrémités de la bande de roulement l'une contre l'autre.

Dans les deux variantes du procédé d'application décrit, l'application de la bande de roulement 2 sur le sommet de la carcasse 1 est intégralement réalisée au moyen du rouleau applicateur 33. Cela améliore nettement la régularité d'application des bandes de roulement.

Après le retrait de la table d'application 40, l'opérateur peut toujours utiliser l'aide des deux faisceaux des projecteurs laser 36 pour centrer la dernière partie de la bande de roulement 2 sur la carcasse 1, ce qui améliore la précision du centrage par rapport aux procédés manuel et semi-automatiques précédents.

Enfin, il est aussi avantageux d'arrêter la rotation exactement après une rotation de 360° sur la soudure réalisée par les deux extrémités de la bande de roulement 2 appuyées l'une contre l'autre et d'appliquer un effort important du rouleau applicateur avec par exemple une pression du vérin de l'ordre de 5 à 6 bars. Cela permet de garantir à la soudure une exclusion complète de l'air entre la bande de roulement 2 et la carcasse 1 ainsi qu'un aboutage sans décalage radial d'une extrémité par rapport à l'autre.

Les opérations de rechapage se poursuivent ensuite de façon connue.

## Revendications

1. Procédé d'application d'une bande de roulement (2) prémoulée et prévulcanisée sur une carcasse (1) de pneumatique montée gonflée sur un mandrin (21), ladite bande de roulement (2) étant prédécoupée à une longueur voulue inférieure à la plus grande circonférence du sommet de ladite carcasse (1), disposée sur une table d'application (40) et allongée, lors de son application sur ladite carcasse (1), par un rouleau applicateur (33) pressant ladite bande de roulement (2) sur ladite carcasse (1) avec un effort variable, tel que :
- on applique une première partie de ladite longueur voulue de ladite bande de roulement (2) sur ladite carcasse (1) en asservissant son allongement en fonction de la différence entre l'allongement réel mesuré et l'allongement théorique correspondant à une extension uniforme de la bande de roulement (2) sur la carcasse (1), et,
- à la fin de l'application, on asservit l'allongement de la dernière partie de ladite longueur voulue de ladite bande de roulement (2) en fonction des positions respectives des deux extrémités avant (3) et arrière (4) de la bande de roulement (2) comparées visuellement, avec une incidence sensiblement radiale, de telle sorte qu'elles s'aboutent sans recouvrement puis s'appliquent l'une contre l'autre.

2. Procédé d'application d'une bande de roulement (2) prémoulée et prévulcanisée sur une carcasse (1) de pneumatique selon la revendication 1, tel que, après avoir placé sur la bande de roulement (2) n repères divisant ladite bande de roulement (2) en n+1 parties de longueurs égales :
- on met en place l'extrémité avant (3) de la bande de roulement (2) sous le rouleau applicateur (33) jusqu'à une position repérée par un index (38) ;
- on règle l'effort d'application du rouleau applicateur (33) à une valeur appropriée compte tenu de l'allongement à imposer à la bande de roulement (2) pendant son application et du type de bande de roulement (2) ;
- on fait effectuer à la carcasse (1) une première rotation de 360/(n+1) degrés puis on l'arrête ;
- on contrôle les positions respectives du premier des n repères et de l'index (38) ;
- on ajuste l'effort d'application du rouleau applicateur (33) en fonction de la différence de position entre le premier des n repères et l'index (38) ;
- on répète n-1 fois cette opération de contrôle de l'allongement de la bande de roulement (2) ;
- à la fin de l'application, on asservit l'allongement de la dernière partie de ladite bande de roulement (2) en fonction des positions respectives des deux extrémités avant (3) et arrière (4) de la bande de roulement (2) comparées visuellement, avec une incidence sensiblement radiale, de telle sorte qu'elles s'aboutent sans recouvrement puis s'appliquent l'une contre l'autre.

3. Procédé d'application d'une bande de roulement (2) prémoulée et prévulcanisée sur une carcasse (1) de pneumatique selon l'une des revendications 1 ou 2, tel que, à la fin de l'application, l'opérateur suit visuellement, à travers au moins une fente (47) longitudinale de la table d'application (40), avec une incidence sensiblement radiale, les positions respectives des deux extrémités avant (3) et arrière (4) de ladite bande de roulement (2) et ajuste l'allongement de la partie de ladite bande de roulement (2) non encore appliquée de telle sorte qu'elles s'aboutent sans recouvrement puis s'appliquent l'une contre l'autre.

4. Procédé d'application d'une bande de roulement (2) prémoulée et prévulcanisée sur une carcasse (1) de pneumatique selon l'une des revendications 1 à 3, selon lequel, à la fin de l'application, l'opérateur retire la table d'application (40) de la bande de roulement (2) de sa position sous la partie restante non encore appliquée de la bande de roulement (2), puis suit visuellement, avec une incidence sensiblement radiale, les positions respectives des deux extrémités avant (3) et arrière (4) de ladite bande de roulement (2) et ajuste l'allongement de la partie de ladite bande de roulement (2) non encore appliquée de telle sorte que lesdites extrémités s'aboutent sans recouvrement puis s'appliquent l'une contre l'autre.

5. Procédé d'application d'une bande de roulement (2) prémoulée et prévulcanisée sur une carcasse (1) de pneumatique selon l'une des revendications 1 à 4, selon lequel, à la fin de l'application, après que les deux extrémités avant (3) et arrière (4) de la bande de roulement (2) se soient aboutées sans recouvrement, l'effort d'application du rouleau applicateur (33) est fortement augmenté pour mettre les deux extrémités de la bande de roulement (2) en compression l'une contre l'autre.

6. Procédé d'application d'une bande de roulement (2) prémoulée et prévulcanisée sur une carcasse (1) de pneumatique selon l'une des revendications 1 à 5, tel que la rotation de la carcasse (1) est arrêtée lorsque le rouleau applicateur (33) se trouve exactement sur la soudure réalisée par la mise en contact des deux extrémités de la bande de roulement (2) puis l'effort d'application du rouleau applicateur (33) est fortement augmenté.

7. Procédé d'application d'une bande de roulement (2) prémoulée et prévulcanisée sur une carcasse (1) de pneumatique selon l'une des revendications 2 à 6, tel que l'index (38) de repérage de la position de la bande de roulement (2) sur la carcasse (1) se situe dans le plan de l'axe de rotation du rouleau applicateur (33).

8. Dispositif d'application d'une bande de roulement (2) prémoulée et prévulcanisée sur une carcasse (1) de pneumatique comportant un bâti avec :
- des moyens de support (20) capables de maintenir la carcasse (1), de la gonfler et de la mettre en rotation ;
- des moyens d'application (30) de ladite bande de roulement (2) comprenant une table d'application (40), un rouleau applicateur (33) avec des moyens de réglage de l'effort d'application dudit rouleau ;
ledit dispositif étant caractérisé en ce que ladite table d'application (40) est mobile en rotation autour d'un axe (41) parallèle à l'axe de rotation de la carcasse (1), lié à l'une des extrémités de ladite table et placé de telle sorte que l'extrémité libre de ladite table vienne s'appliquer sur le sommet de la carcasse (1) du pneumatique, sensiblement tangentiellement à celui-ci et en ce que ladite table d'application (40) comprend au moins une fente (47) orientée longitudinalement, de telle sorte que l'opérateur puisse suivre visuellement, avec une incidence sensiblement radiale, les positions respectives des deux extrémités avant (3) et arrière (4) de la bande de roulement (2) à la fin de l'application de ladite bande de roulement (2) sur ladite carcasse (1).

9. Dispositif selon la revendication 8, caractérisé en ce que ladite table d'application (40) est incurvée avec un rayon de courbure proche de celui de la carcasse (1) de pneumatique.

10. Dispositif d'application d'une bande de roulement (2) prémoulée et prévulcanisée sur une carcasse (1) de pneumatique comportant un bâti avec :
- des moyens de support (20) capables de maintenir la carcasse (1), de la gonfler et de la mettre en rotation ;
- des moyens d'application (30) de ladite bande de roulement (2) comprenant une table d'application (40), un rouleau applicateur (33) avec des moyens de réglage de l'effort d'application dudit rouleau ;
ledit dispositif étant caractérisé en ce que ladite table d'application est mobile en rotation autour d'un axe 41 parallèle à l'axe de rotation de la carcasse (1), lié à l'une des extrémités de ladite table et placé de telle sorte que l'extrémité libre de ladite table vienne s'appliquer sur le sommet de la carcasse (1) du pneumatique, sensiblement tangentiellement à celui-ci et en ce que ladite table d'application (40) peut être retirée de sa position sous la partie de la bande de roulement (2) non encore appliquée avec un mouvement de retrait de direction, au moins initialement, sensiblement tangentielle par rapport au sommet de la carcasse (1), de telle sorte que l'opérateur puisse suivre visuellement, avec une incidence sensiblement radiale, les positions respectives des deux extrémités avant (3) et arrière (4) de la bande de roulement (2) à la fin de l'application de ladite bande de roulement (2) sur ladite carcasse (1).

11. Dispositif d'application d'une bande de roulement (2) prémoulée et prévulcanisée sur une carcasse (1) de pneumatique selon la revendication 10, caractérisé en ce que la table d'application (40) est retirée avec un mouvement de rotation d'axe (44) parallèle à l'axe de rotation de la carcasse (1), ledit axe étant situé au-dessus du point de contact entre ladite table d'application (40) et le sommet de la carcasse (1).

12. Dispositif d'application d'une bande de roulement (2) prémoulée et prévulcanisée sur une carcasse (1) de pneumatique selon l'une des revendications 8 à 11, caractérisé en ce que l'extrémité de la table d'application (40) en contact avec le sommet de la carcasse (1) est placé à une distance L sensiblement fixe de l'axe du rouleau applicateur (33).

13. Dispositif d'application d'une bande de roulement (2) prémoulée et prévulcanisée sur une carcasse (1) de pneumatique selon la revendication 12, caractérisé en ce que la distance L entre l'extrémité de la table d'application (40) en contact avec le sommet de la carcasse (1) et l'axe du rouleau applicateur (33) est de l'ordre de 130 mm.

14. Dispositif d'application d'une bande de roulement (2) prémoulée et prévulcanisée sur une carcasse (1) de pneumatique selon l'une des revendications 8 à 13, caractérisé en ce qu'il est pourvu de moyens de déplacement vertical des moyens de support (20) de la carcasse (1) d'une position A de montage de ladite carcasse (1) jusqu'à une position B de travail telle que le point le plus haut du sommet de la carcasse (1) a une position fixe du quel que soit le diamètre de ladite carcasse (1).

15. Dispositif d'application d'une bande de roulement (2) prémoulée et prévulcanisée sur une carcasse (1) de pneumatique selon l'une des revendications 8 à 14, caractérisé en ce qu'il comporte des moyens de centrage (35) de la bande de roulement (2) sur la carcasse (1) indépendants de la table d'application (40).

16. Dispositif d'application d'une bande de roulement (2) prémoulée et prévulcanisée sur une carcasse (1) de pneumatique selon la revendication 15, caractérisé en ce que les moyens de centrage (35) sont constitués par au moins un faisceau laser plan orienté perpendiculairement à l'axe de rotation de la carcasse (1).

## Claims

1. A method for the application of a premoulded and prevulcanised tread (2) on a mounted inflated tyre casing (1) on a mandrel (21), said tread (2) being precut to a desired length, less than the greatest circumference of the crown of said casing (1), arranged on an application table (40) and elongated, on its application on said casing (1), by an applicator roller (33) pressing said tread (2) on said casing (1) with a variable force, such that:
- a first part of said desired length of said tread (2) is applied on said casing (1) by controlling its elongation as a function of the difference between the actual measured elongation and the theoretical elongation corresponding to a uniform extension of the tread (2) on the casing (1), and,
- at the end of the application, the elongation of said last part of said desired length of said tread (2) is controlled as a function of the respective positions of the two front (3) and rear (4) ends of the tread (20) compared visually, with a susbtantially radial incidence, such that they abut each other without overlapping, then apply themselves one against the other.

2. The method for the application of a premoulded and prevulcanised tread (2) on a tyre casing (1) according to Claim 1 such that, after having placed on the tread (2) n marks dividing said tread (2) into n+1 parts of equal length:
- the front end (3) of the tread (2) is put in place under the applicator roller (33) up to a position marked by an index (38);
- the force of application of the applicator roller (33) is regulated to a suitable value, taking into account the elongation to be imposed on the tread (2) during its application and the type of tread (2);
- a first rotation of 360/(n+1) degrees is performed on the casing (1) then it is stopped;
- the respective positions of the first of the n marks and of the index (38) are monitored;
- the force of application of the applicator roller (33) is adjusted as a function of the difference in position between the first of the n marks and the index (38);
- this operation of monitoring the elongation of the tread (2) is repeated n-1 times;
- at the end of the application, the elongation of the last part of said tread (2) is controlled as a function of the respective positions of the two front (3) and rear (4) ends of the tread (2) compared visually, with a substantially radial incidence, such that they abut each other without overlapping then apply themselves one against the other.

3. The method for the application of a premoulded and prevulcanised tread (2) on a tyre casing (1) according to one Claims 1 or 2, such that, at the end of the application, the operator follows visually, through at least one longitudinal slit (47) of the applciation table (40), with a substantially radial incidence, the respective positions of the two front (3) and rear (4) ends of said tread (2) and adjusts the elongation of the part of said tread (2) not yet applied such that they abut each other without overlapping then apply themselves one against the other.

4. The method of application of a premoulded and prevulcanised tread (2) on a tyre casing (1) according to any of Claims 1 to 3, according to which, at the end of the application, the operator withdraws the application table (40) of the tread (2) from its position beneath the remaining part of the tread (2) which has not yet been applied, then follows visually, with a substantially radial incidence, the respective positions of the two front (3) and rear (4) ends of said tread (2) and adjusts the elongation of the part of said tread (2) not yet applied, such that said ends abut each other without overlapping then apply themselves one against the other.

5. The method of application of a premoulded and prevulcanised tread (2) on a tyre casing (1) according to any of Claims 1 to 4, according to which, at the end of the application, after the two front (3) and rear (4) ends of the tread (2) have abutted each other without overlapping, the force of application of the applicator roller (33) is greatly increased to put the two ends of the tread (2) under compression one against the other.

6. The method of application of a premoulded and prevulcanised tread (2) on a tyre casing (1) according to any of Claims 1 to 5, such that the rotation of the casing (1) is stopped when the applicator roller (33) is situated exactly above the seam produced by putting into contact the two ends of the tread (2) then the force of application of the applicator roller (33) is greatly increased.

7. The method of application of a premoulded and prevulcanised tread (2) on a tyre casing (1) according to any of Claims 2 to 6, such that the index (38) for marking the position of the tread (2) on the casing (1) is situated in the plane of the rotation axis of the applicator roller (33).

8. A device for the application of a premoulded and prevulcanised tread (2) on a tyre casing (1) comprising a frame with:
- support means (20) able to hold the casing (1), to inflate it and set it in rotation;
- means (30) for the application of said tread (2) comprising an application (40), an applicator roller (33) with means for regulating the force of application of said roller;
said device being characterised in that said application table (40) is movable in rotation about an axis (41) parallel to the axis of rotation of the casing (1), connected to one of the ends of said table and placed such that the free end of said table comes to apply itself on the crown of the tyre casing (1), substantially tangentially thereto and in that said application table (40) comprises at least one slit (47) oriented longitudinally, such that the operator can follow visually, with a substantially radial incidence, the respective positions of the two front (3) and rear (4) ends of the tread (2) at the end of the application of said tread (2) on said casing (1).

9. The device according to Claim 8, characterised in that said application table (40) is concave with a radius of curvature close to that of the tyre casing (1).

10. The device for the application of a premoulded and prevulcanised tread (2) on a tyre casing (1) comprising a frame with:
- support means (20) able to hold the casing (1), to inflate it and set it in rotation;
- means (30) for the application of said tread (2) comprising an application table (40), an applicator roller (33) with means for regulating the force of application of said roller;
said device being characterised in that said application table is movable in rotation about an axis 41 parallel to the rotation axis of the casing (1) connected to one of the ends of said table and placed such that the free end of said table comes to apply itself on the crown of the tyre casing (1), substantially tangentially thereto and in that said application table (40) can be withdrawn from its position beneath the part of the tread (2) not yet applied with a withdrawal movement in a direction, at least initially, substantially tangential with respect to the crown of the casing (1), such that the operator can follow visually, with a substantially radial incidence, the respective positions of the two front (3) and rear (4) ends of the tread (2) at the end of the application of said tread (2) on said casing (1).

11. The device for the application of a premoulded and prevulcanised tread (2) on a tyre casing (1) according to Claim 10, characterised in that the application table (40) is withdrawn with a rotation movement of axis (44) parallel to the rotation axis of the casing (1), said axis being situated above the point of contact between said application table (40) and the crown of the casing (1).

12. The device for the application of a premoulded and prevulcanised tread (2) on a tyre casing (1) according to any of Claims 8 to 11, characterised in that the end of the application table (40) in contact with the crown of the casing (1) is placed at a substantially fixed distance L of the axis of the applicator roller (33).

13. The device for the application of a premoulded and prevulcanised tread (2) on a tyre casing (1) according to Claim 12, characterised in that the distance L between the end of the application table (40) in contact with the crown of the casing (1) and the axis of the applicator roller (33) is in the order to 130 mm.

14. The device for the application of a premoulded and prevulcanised tread (2) on a tyre casing (1) according to any of Claims 8 to 13, characterised in that it is provided with means for vertical displacement of the support means (20) of the casing (1) from a mounting position A of said casing (1) up to a working position B, such that the highest point of the crown of the casing (1) has a fixed position whatever the diameter of said casing (1).

15. The device for the application of a premoulded and prevulcanised tread (2) on a tyre casing (1) according to any of Claims 8 to 14, characterised in that it comprises means (35) for centering the tread (2) on the casing (1) which are independent of the application table (40).

16. The device for the application of a premoulded and prevulcanised tread (2) on a tyre casing (1) according to Claim 15, characterised in that the centering means (35) are constituted by at least one plane laser beam oriented perpendicularly to the rotation axis of the casing (1).

## Patentansprüche

1. Verfahren zum Aufbringen einer vorgeformten und vorvulkanisierten Lauffläche (2) auf der Karkasse (1) eines auf einem Dorn (21) montierten, aufgepumpten Reifens, wobei die genannte Lauffläche (2) vorher auf eine gewünschte Länge zugeschnitten wurde, die kleiner ist als der größte Scheitelumfang der genannten Karkasse (1), auf einem Auftragetisch (40) angeordnet und während ihres Auftrags auf der genannten Karkasse (1) durch eine Auftragewalze (33) gelängt wird, die die genannte Lauffläche (2) mit einer variablen Kraft auf die genannte Karkasse (1) aufdrückt, mit den folgenden Schritten:
- man bringt einen ersten Teil der genannten, gewünschten Länge der genannten Lauffläche (2) auf der genannten Karkasse (1) auf, indem man deren Längung in Funktion der Differenz zwischen der tatsächlichen, gemessenen Längung und der theoretischen Längung einstellt, die einer gleichförmigen Dehnung der Lauffläche (2) auf der Karkasse (1) entspricht, und
- man regelt am Ende der Aufbringung die Längung des letzten Teils der genannten, gewünschten Länge der genannten Lauffläche (2) in Funktion der jeweiligen Lage des vorderen (3) und hinteren (4) Endes der Lauffläche (2), die mit im wesentlichen radialer Blickrichtung durch Augenschein verglichen wurden, und zwar derart, daß sie ohne Überdeckung aneinander anstoßen und sich dann aneinander anlegen.

2. Verfahren zum Aufbringen einer vorgeformten und vorvulkanisierten Lauffläche (2) auf der Karkasse (1) eines Reifens nach Anspruch 1, mit den folgenden Schritten und nach der Anordnung von n Markierungen auf der Lauffläche (2), die die genannte Lauffläche (2) in n+1 Teile mit gleichen Längen unterteilen:
- man ordnet das vordere Ende (3) der Lauffläche (2) unter der Auftragewalze (33) bis zu einer Lage an, die durch einen Zeiger (38) markiert ist;
- man reguliert die Auftragekraft der Auftragewalze (33) auf einen geeigneten Wert ein, der der Längung, die der Lauffläche (2) während ihres Aufbringens mitzuteilen ist, und der Art der Lauffläche (2) Rechnung trägt;
- man läßt die Karkasse (1) eine erste Drehung um 360/(n+1) Grad durchführen und hält dann an;
- man überwacht die jeweiligen Lagen der ersten der n Markierungen und des Zeigers (38);
- man stellt die Auftragekraft der Auftragewalze (33) in Funktion der Lagedifferenz zwischen der ersten der n Markierungen und dem Zeiger (38) ein
- man wiederholt diesen Vorgang der Überwachung der Längung der Lauffläche (2) n-1-mal; und
- man regelt am Ende des Auftrags die Längung des letzten Teils der genannten Lauffläche (2) in Funktion der jeweiligen Lagen des vorderen (3) und hinteren (4) Endes der Lauffläche (2) mit im wesentlichen radialer Blickrichtung nach Augenschein derart ein, daß sie ohne Überdeckung aneinander anstoßen und sich dann aneinander anlegen.

3. Verfahren zum Aufbringen einer vorgeformten und vorvulkanisierten Lauffläche (2) auf der Karkasse (1) eines Reifens nach einem der Ansprüche 1 oder 2, dadurch gekennzeichnet, daß die Bedienungsperson am Ende des Auftrags durch Augenschein über mindestens einen Längsschlitz (47) des Aufbringtisches (40) hinweg bei im wesentlichem radialer Blickrichtung die jeweiligen Positionen des vorderen (3) und hinteren (4) Endes der genannten Lauffläche (2) verfolgt und die Längung des Teiles der genannten Lauffläche (2), der noch nicht aufgebracht ist, derart einstellt, daß sie ohne Überdeckung aneinander anstoßen und sich dann gegeneinander anlegen.

4. Verfahren zum Aufbringen einer vorgeformten und vorvulkanisierten Lauffläche (2) auf der Karkasse (1) eines Reifens nach einem der Ansprüche 1 bis 3, wonach die Bedienungsperson am Ende des Auftrags den Auftragetisch (40) der Lauffläche (2) aus seiner Lage unter dem verbleibenden, noch nicht aufgebrachten Teil der Lauffläche (2) zurückzieht und dann durch Augenschein bei im wesentlichen radialer Blickrichtung die jeweiligen Lagen des vorderen (3) und hinteren (4) Endes der genannten Lauffläche (2) verfolgt und die Längung des Teils der genannten Lauffläche (2) einstellt, der noch nicht aufgebracht ist, und zwar derart, daß die genannten Enden ohne Überdeckung aneinander anstoßen und sich dann gegeneinander anlegen.

5. Verfahren zum Aufbringen einer vorgeformten und vorvulkanisierten Lauffläche (2) auf der Karkasse (1) eines Reifens nach einem der Ansprüche 1 bis 4, wonach am Ende des Aufbringens und nachdem das vordere (3) und hintere (4) Ende der Lauffläche (2) ohne Überdeckung aneinander gelegt wurden, die Auftragekraft der Auftragewalze (33) stark erhöht wird, um die beiden Enden der Lauffläche (2) gegeneinander unter Druck zu setzen.

6. Verfahren zum Aufbringen einer vorgeformten und vorvulkanisierten Lauffläche (2) auf der Karkasse (1) eines Reifens nach einem der Ansprüche 1 bis 5, wobei die Drehung der Karkasse (1) angehalten wird, wenn die Auftragewalze (33) sich genau über der Schweißstelle befindet, die durch das Herstellen der Berührung der beiden Enden der Lauffläche (2) hergestellt wurde, wobei dann die Auftragekraft der Auftragewalze (33) stark erhöht wird.

7. Verfahren zum Aufbringen einer vorgeformten und vorvulkanisierten Lauffläche (2) auf der Karkasse (1) eines Reifens nach einem der Ansprüche 2 bis 6, wobei der Zeiger (38) zur Markierung der Lage der Lauffläche (2) auf der Karkasse (1) in der Ebene der Drehachse der Auftragewalze (33) liegt.

8. Vorrichtung zum Aufbringen einer vorgeformten und vorvulkanisierten Lauffläche (2) auf der Karkasse (1) eines Reifens, mit einem Maschinengestell und den folgenden Merkmalen:
- Tragemittel (20), die imstande sind, die Karkasse (1) zu halten, sie aufzupumpen und sie in Drehung zu versetzen; und
- Aufbringmittel (30) für die genannte Lauffläche (2), mit einem Auftragetisch (40) und einer Auftragewalze (33) mit Mitteln zum Einregulieren der Andruckkraft der genannten Walze;
wobei die genannte Vorrichtung dadurch gekennzeichnet ist, daß der genannte Auftragetisch (40) zur Drehung um eine Achse (41) beweglich ist, die zur Drehachse der Karkasse (1) parallel ist, mit dem einen der Ende des genannten Tischs verbunden ist und derart angeordnet ist, daß das freie Ende des genannten Tischs zur Anlage auf dem Scheitel der Karkasse (1) des Reifens gelangt, und zwar im wesentlichen tangential zu diesem, und daß der genannte Auftragetisch (40) mindestens einen in Längsrichtung ausgerichteten Schlitz (47) aufweist, und zwar derart, daß der Fachmann durch Augenschein mit im wesentlichen radialer Blickrichtung die jeweiligen Lagen des vorderen (3) und hinteren (4) Endes der Lauffläche (2) am Ende des Aufbringens der genannten Lauffläche (2) auf der genannten Karkasse (1) verfolgen kann.

9. Vorrichtung nach Anspruch 8, dadurch gekennzeichnet, daß der genannte Auftragetisch (40) einwärts gekrümmt ist, mit einem Krümmungsradius, der dem der Karkasse (1) des Reifens nahekommt.

10. Vorrichtung zum Aufbringen einer vorgeformten und vorvulkanisierten Lauffläche (2) auf die Karkasse (1) eines Reifens, mit einem Maschinengestell und mit:
- Tragemitteln (20), die imstande sind, die Karkasse (1) zu halten, sie aufzupumpen und sie in Drehung zu versetzen; und
- Auftragemitteln (30) für die genannte Lauffläche (2), mit einem Auftragetisch (40) und einer Auftragewalze (33) mit Mitteln zum Einstellen der Andruckkraft der genannten Walze;
wobei die genannte Vorrichtung dadurch gekennzeichnet ist, daß der genannte Auftragetisch zur Drehung rund um eine Achse 41 beweglich ist, die parallel zur Drehachse der Karkasse (1) verläuft, mit einen der Ende des genannten Tischs verbunden ist und derart angeordnet ist, daß das freie Ende des genannten Tischs zur Anlage auf dem Scheitel der Karkasse (1) des Reifens gelangt, und zwar im wesentlichen tangential zu diesem, und daß der genannte Auftragetisch (40) aus seiner Lage unter dem Teil der Lauffläche (2), der noch nicht aufgebracht ist, mit einer Rückzugsbewegung zurückgezogen werden kann, die eine Richtung aufweist, die mindestens anfangs im wesentlichen tangential in Bezug auf den Scheitel der Karkasse (1) verläuft, und zwar derart, daß die Bedienungsperson durch Augenschein mit im wesentlichen radialer Blickrichtung die jeweiligen Lagen des vorderen (3) und hinteren (4) Endes der Lauffläche (2) am Ende des Aufbringens der genannten Lauffläche (2) auf der genannten Karkasse (1) verfolgen kann.

11. Vorrichtung zum Aufbringen einer vorgeformten und vorvulkanisierten Lauffläche (2) auf der Karkasse (1) eines Reifens nach Anspruch 10, dadurch gekennzeichnet, daß der Auftragetisch (40) mit einer Drehbewegung um eine Achse (44) zurückgezogen wird, die parallel zur Drehachse der Karkasse (1) verläuft, und daß die genannte Achse über dem Berührungspunkt zwischen dem genannten Auftragetisch (40) und dem Scheitel der Karkasse (1) gelegen ist.

12. Vorrichtung zum Aufbringen einer vorgeformten und vorvulkanisierten Lauffläche (2) auf der Karkasse (1) eines Reifens nach einem der Ansprüche 8 bis 11, dadurch gekennzeichnet, daß das Ende des Auftragetischs (40), das in Berührung mit dem Scheitel der Karkasse (1) steht, unter einem im wesentlichen feststehenden Abstand L von der Achse der Auftragewalze (33) angeordnet ist.

13. Vorrichtung zum Aufbringen einer vorgeformten und vorvulkanisierten Lauffläche (2) auf der Karkasse (1) eines Reifens nach Anspruch 12, dadurch gekennzeichnet, daß der Abstand L zwischen dem Ende des Auftragetischs (40), der in Berührung mit dem Scheitel der Karkasse (1) steht, und der Achse der Auftragewalze (33) in der Größenordnung von 130 mm liegt.

14. Vorrichtung zum Aufbringen einer vorgeformten und vorvulkanisierten Lauffläche (2) auf der Karkasse (1) eines Reifens nach einem der Ansprüche 8 bis 13, dadurch gekennzeichnet, daß Mittel zum vertikalen Versetzen der Tragemittel (20) der Karkasse (1) aus einer Montagelage A für die genannte Karkasse (1) bis in eine Arbeitslage B vorgesehen sind, und zwar derart, daß der höchste Punkt des Scheitels der Karkasse (1) eine feste Lage aufweist, gleichgültig, wie der Durchmesser der genannten Karkasse (1) auch sein mag.

15. Vorrichtung zum Aufbringen einer vorgeformten und vorvulkanisierten Lauffläche (2) auf der Karkasse (1) eines Reifens nach einem der Ansprüche 8 bis 14, dadurch gekennzeichnet, daß sie Zentriermittel (35) für die Lauffläche (2) auf der Karkasse (1) aufweist, die unabhängig sind vom Auftragetisch (40).

16. Vorrichtung zum Aufbringen einer vorgeformten und vorvulkanisierten Lauffläche (2) auf der Karkasse (1) eines Reifens nach Anspruch 15, dadurch gekennzeichnet, daß die Zentriermittel (35) von mindestens einem Laserstrahl gebildet sind, der senkrecht zur Drehachse der Karkasse (1) ausgerichtet ist.
